# EUROPÄISCHE PATENTSCHRIFT

(11) **EP 1 058 420 B1**
(45) Veröffentlichungstag und Bekanntmachung des Hinweises auf die Patenterteilung: **27.07.2011**
(21) Anmeldenummer: 00201634.3
(22) Anmeldetag: 04.05.2000
(51) Int. Cl.: H04B 7/26, H04W 88/04

(54) **Drahtloses Netzwerk mit einem versteckten Netzknoten**
Wireless network with a hidden node
Réseau sans fil avec un noeud caché

(30) Priorität: 12.05.1999 DE 19921716
(43) Veröffentlichungstag der Anmeldung: 06.12.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, Philips Corp. Intel. Prop. GmbH, 52064 Aachen (DE)
(74) Vertreter: Volmer, Georg

(56) Entgegenhaltungen:
- EP-A2- 0 526 388
- JP-A- 8 097 821
- US-A- 5 612 948
- HAARTSEN J: "BLUETOOTH - THE UNIVERSAL RADIO INTERFACE FOR AD HOC, WIRELESS CONNECTIVITY" ERICSSON REVIEW, ERICSSON, STOCKHOLM, SE, Nr. 3, 1998, Seiten 110-117, XP000783249 ISSN: 0014-0171

## Beschreibung

Die Erfindung bezieht sich auf ein drahtloses Netzwerk mit mehreren jeweils eine Funkvorrichtung enthaltenen Netzknoten, von denen einer einen Transfer-Netzknoten bildet, der zur Übertragung von Daten zwischen wenigstens einem versteckten Netzknoten und allen anderen Nerzknoten vorgesehen ist.

Ein solches drahtloses Netzwerk ist aus dem Artikel "Code-Name Bluetooth" von Wolfgang Schulte, Funkschau 23, 1998, Seiten 80 und 81, bekannt. Das drahtlose Netzwerk besteht aus mehreren Piconetzen, die jeweils mehrere Nerzknoten enthalten. Einer der Netzknoten in einem Piconetz hat eine Masterfunktion. Alle anderen Netzknoten in einem Piconetz haben eine Slavefunktion. Einer der Netzknoten mit Slavefunktion in einem solchen Piconetz dient zur Übertragung von Daten mit einem Netzknoten eines anderen Piconetzes.

US 5,612,948 zeigt ein Netzwerk mit einer Basisstation, einem Netzknoten, der direkten Kontakt zur Basisstation hat und einem versteckten Netzknoten, der zwar keinen direkten Kontakt zur Basisstation aber zum Netzknoten hat. Die Basisstation ist zum Aussenden von Steuerdaten vorgesehen. Diese Steuerdaten dienen der Synchronisation aller Netzknoten im Netzwerk. Der Netzknoten leitet die Steuerdaten an den versteckten Netzknoten weiter. Auf die Steuerdaten antworten alle Netzknoten im Netzwerk mit einer sog. "base probe". Da der versteckte Netzknoten keinen direkten Kontakt zur Basisstation hat, empfängt der Netzknoten die "base probe"-Daten und leitet sie verzögert als "repeat probe"-Daten weiter.

EP 0 526 388 A2 zeigt ein Netzwerk mit einem Steuerknoten, mehreren Netzknoten, die direkten Kontakt zum Steuerknoten und mehreren Netzknoten, die keinen Kontakt zum Steuerknoten haben. Es wird vorgeschlagen, in die Sendezeit eine sog. "turn around"-Periode einzubauen, in der die einzelnen Terminals entscheiden können, ob eine empfangene Nachricht weiterzuleiten ist oder nicht.

Der Erfindung liegt die Aufgabe zugrunde, ein drahtloses Netzwerk zu schaffen, bei welchen Daten von mehreren direkt erreichbaren Netzknoten an einen Netzknoten, der nicht von allen Netzknoten erreichbar ist, auf eine andere Art übertragen werden.

Diese Aufgabe wird durch ein drahtloses Netzwerk mit den Merkmalen des Anspruch 1 gelöst.

Unter einer drahtlosen Übertragung ist eine Funk-, Infrarot-, Ultraschallübertragung etc. zu verstehen. In dem drahtlosen Netzwerk ermöglicht ein Transfer-Netzknoten einem versteckten Netzknoten Daten eines für den Funkverkehr im drahtlosen Netzwerk vorgesehenen zentralen Netzknotens zu liefern. Der Transfer-Netzknoten bildet die Funktion des zentralen Netzknotens für den versteckten Netzknoten nach. Dies wird erreicht, indem in der MAC-Schicht (MAC = Medium Access Control) ein Subrahmen, der in dem MAC-Rahmen liegt, zugewiesen wird. Anhand des MAC-Rahmens und in dem MAC-Rahmen liegenden Subrahmen wird die Datenübertragung in einer Funkvorrichtung eines Netzknotens organisiert.

Der zentrale Netzknoten sendet während einer ersten Phase des Rahmens Rahmensynchronisationsdaten und während einer zweiten Phase des Rahmens Steuerdaten aus. Die Erfindung ermöglicht, daß diese Daten an den versteckten Netzknoten weitergeleitet werden, indem der Transfer-Netzknoten während einer ersten Phase des Subrahmens zur Sendung der von dem zentralen Netzknoten empfangenen Rahmensynchronisationsdaten und während einer zweiten Phase des Rahmens zur Sendung von bestimmten von dem zentralen Netzknoten empfangenen Steuerdaten vorgesehen ist.

Patentansprüche 4, 5 und 6 beziehen sich auf weitere Phasen des Rahmens und Subrahmens. Vor der Einbindung eines versteckten Netzknotens in das drahtlose Netzwerk wird der Subrahmen Initialisierungs-Subrahmen und nach der Einbindung Arbeits-Subrahmen genannt.

Die Erfindung bezieht sich gemäß Patentanspruch 7 auch auf ein Verfahren zur drahtlosen Übertragung von Daten zwischen mehreren jeweils eine Funkvorrichtung enthaltenen Netzknoten, gemäß Patentanspruch 8 auf einen als zentralen Netzknoten bezeichneten Netzknoten und gemäß Patentanspruch 9 auf einen als Transfer-Netzknoten bezeichneten Netzknoten.

Ausführungsbeispiele der Erfindung werden nachstehend anhand der Figuren näher erläutert. Es zeigen:
- Fig. 1: ein drahtloses Netzwerk mit mehreren Netzknoten,
- Fig. 2: einen in dem drahtlosen Netzwerk nach Fig. 1 verwendeten MAC- Rahmen,
- Fig. 3: ein drahtloses Netzwerk mit mehreren Netzknoten, von denen einer einen versteckten Netzknoten bildet und
- Fig. 4, 5 und 6: in dem drahtlosen Netzwerk nach Fig. 3 verwendete MAC- Rahmen, die einen Subrahmen enthalten.

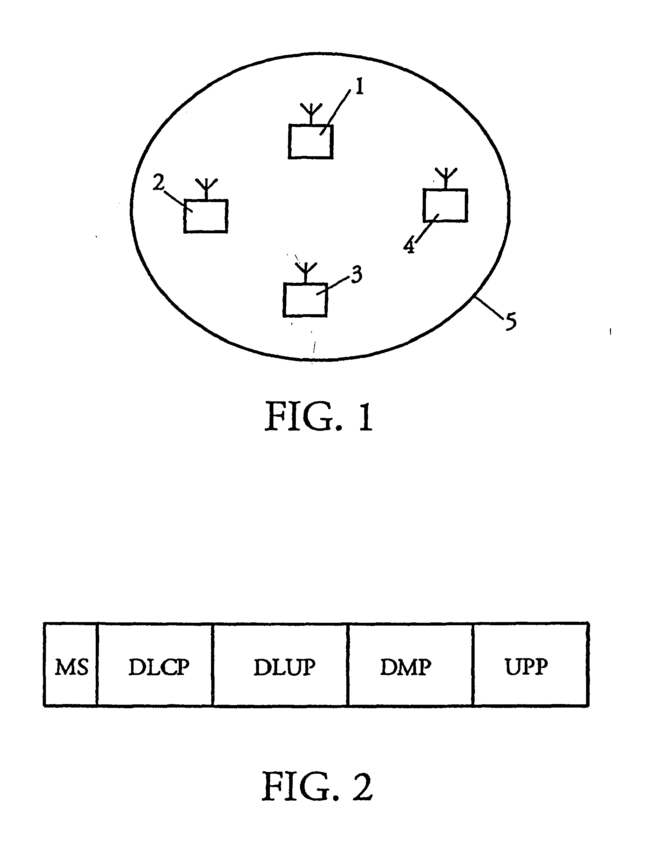

In Fig. 1 ist ein drahtloses Netzwerk mit mehreren Netzknoten 1 bis 4 dargestellt. Die Netzknoten 1 bis 4 tauschen jeweils Daten über Funkstrecken aus. Der Netzknoten 1, der die Funktion einer Basisstation in einem drahtlosen Netzwerk hat, wird als zentraler Netzknoten bezeichnet und steuert den Funkverkehr in dem drahtlosen Netzwerk. Die Netzknoten 2 bis 4 werden normale Netzknoten genannt und tauschen miteinander und mit dem zentralen Netzknoten Daten aus. Der Bereich, in dem der zentrale Netzknoten 1 Daten mit den anderen Netzknoten 2 bis 4 austauschen kann, ist durch eine Ellipse 5 in der Fig. 1 angedeutet.

Ein Netzknoten 1 bis 4 enthält wenigstens eine Funkvorrichtung, die jeweils Funkverbindungen zu anderen Netzknoten herstellt, und gegebenenfalls weitere Anwendungsgeräte. Solch Geräte können beispielsweise ein Videocodec, ein Videorecorder, ein Monitor, ein Tuner, ein CD-Spieler etc. sein. Die an sich bekannte Funkvorrichtung enthält eine Schnittstellenschaltung, eine Protokollvorrichtung, Modem, eine Hochfrequenzschaltung und eine Antenne. Die Schnittstellenschaltung tauscht Daten gegebenenfalls nach einer Formatanpassung zwischen der Protokollvorrichtung und den anderen Geräten eines Netzknotens 1 bis 4 aus. Von der Antenne empfangene Daten sendet die Hochfrequenzschaltung über das Modem zur Protokollvorrichtung. Ferner strahlt die Antenne von der Protokollvorrichtung stammende und von dem Modem und der Hochfrequenzschaltung weitergeleitete Daten aus.

Die Protokollvorrichtung, die beispielsweise als Prozessorsystem ausgebildet ist, bildet aus den von der Schnittstellenschaltung gelieferten Daten Paketeinheiten oder aus den vom Modem zugeführten Paketeinheiten für die Schnittstellenschaltung verarbeitbare Daten. Eine Paketeinheit enthält außer den empfangenen Daten zusätzliche von der Protokollvorrichtung gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff einer Funkvorrichtung zum Funkübertragungsmedium und die LLC-Schicht führt eine Fluß- und Fehlerkontrolle durch.

In dem drahtlosen Netzwerk nach Fig. 1 können die Daten zwischen den Netzknoten 1 bis 4 nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Daten werden in bestimmten zugewiesenen Kanälen übertragen. Ein Kanal ist durch einen Frequenzbereich, einen Zeitbereich und z.B. beim CDMA-Verfahren durch einen Spreizungscode bestimmt.

In der MAC-Schicht eines Netzknotens 1 bis 4 ist die Datenübertragung anhand eines Rahmens organisiert. Dieser Rahmen weist verschiedene Zeitschlitze für Funksynchronisations-, Steuer- und Nutzdaten auf und wird als MAC-Rahmen bezeichnet. In dem in Fig. 1 dargestelltem zentral gesteuertem drahtlosen Netzwerk ist der zentrale Netzknoten 1 für die Funksynchronisation und ebenso für die dynamische Zeitschlitzzuweisung in dem MAC-Rahmen für die normalen Netzknoten 2 bis 4 verantwortlich. Einen solchen MAC-Rahmen zeigt Fig. 2. Jeder MAC-Rahmen weist am Anfang eine Rahmensynchronisationsphase MS (frame synchronisation preamble) auf, in welcher Rahmensynchronisationsdaten von dem zentralen Netzknoten 1 erzeugt werden. Nach der Rahmensynchronisationsphase MS folgt eine Downlink-Steuerphase DLCP (downlink control phase), in der Steuerdaten von dem zentralen Netzknoten 1 an die normalen Netzknoten 2 bis 4 gesendet werden, und eine Downlink-Nutzdatenphase DLUP (downlink user phase), in der Nutzdaten von dem zentralen Netzknoten 1 an die normalen Netzknoten 2 bis 4 gesendet werden. Der Downlink-Nutzdatenphase DLUP folgt eine direkte Austauschphase DMP (direct mode phase), in der die normalen Netzknoten 2 bis 4 Steuer- und Nutzdaten miteinander austauschen. In der letzten Phase, der Uplink-Phase UPP (uplink phase) senden die normalen Netzknoten 2 bis 4 Steuer- und Nutzdaten zu dem zentralen Netzknoten 1 über einen dedizierten Kanal oder einen Zufallskanal.

Die Phasen MS, DLCP, DLUP, DMP und UPP enthalten einen oder mehrere Zeitschlitze (Kanäle). Die Länge der Phasen und auch der Zeitschlitze kann fest vorgegeben oder variabel sein. Im letztgenannten Fall bestimmt der zentrale Netzknoten 1 in Abhängigkeit von den jeweiligen Anforderungen im drahtlosen Netzwerk die Länge der Phasen und der Zeitschlitze.

Ein dedizierter Kanal betrifft eine Punkt-zu-Punkt-Verbindung zwischen zwei Netzknoten. Ein Zufallskanal kann aus einem oder mehreren Zeitschlitzen bestehen, über die bestimmte Daten von normalen Netzknoten 2 bis 4 übertragen werden. Hierbei wird von dem zentralen Netzknoten 1 nicht der Zeitpunkt eines Zugriffs eines normalen Netzknotens 2 bis 4 auf den Zufallskanal festgelegt. Der Zufallskanal kann von einem normalen Netzknotens 2 bis 4 z.B. für einen Registrierungswunsch verwendet werden.

In der Phase DLCP kann der zentrale Netzknoten 1 eine Mitteilung an alle normalen Netzknoten 2 bis 4 versenden. Die Mitteilung gibt an, welche Zeitschlitze die normalen Netzknoten 2 bis 4 zur Übertragung ihrer Daten in den Phasen DMP und/oder UPP verwenden dürfen. Der zentrale Netzknoten 1 kann auch eine Mitteilung an alle normalen Netzknoten 2 bis 4 während der Phase DLCP senden, um die normalen Netzknoten 2 bis 4 zu benachrichtigen, welche der Zeitschlitze in der Phase DLUP benutzt werden, um Nutzdaten von dem zentralen Netzknoten 1 zu empfangen, und/oder welche der Zeitschlitze in der Phase DMP benutzt werden, um Steuer- und Nutzdaten von anderen normalen Netzknoten 2 bis 4 zu empfangen. Zusätzlich benutzt der zentrale Netzknoten 1 die Phase DLCP, um den normalen Netzknoten 2 bis 4 die Position eines Zufallskanals RACH (random access channel) mitzuteilen. Wie oben erwähnt, wird der Zufallskanal RACH gewöhnlich zur Registrierung von neuen normalen Netzknoten im Netzwerk verwendet. Nach der Registrierung kann dann ein normaler Netzknoten die Phase UPP zur Anforderung eines oder mehrerer Zeitschlitze mittels einer Nachricht an den zentralen Netzknoten 1 benutzen. Hierbei wird dem zentralen Netzknoten dann auch eine Nach richt gesendet, in der die Datenmenge angegeben wird, die der normale Netzknoten übertragen möchte.

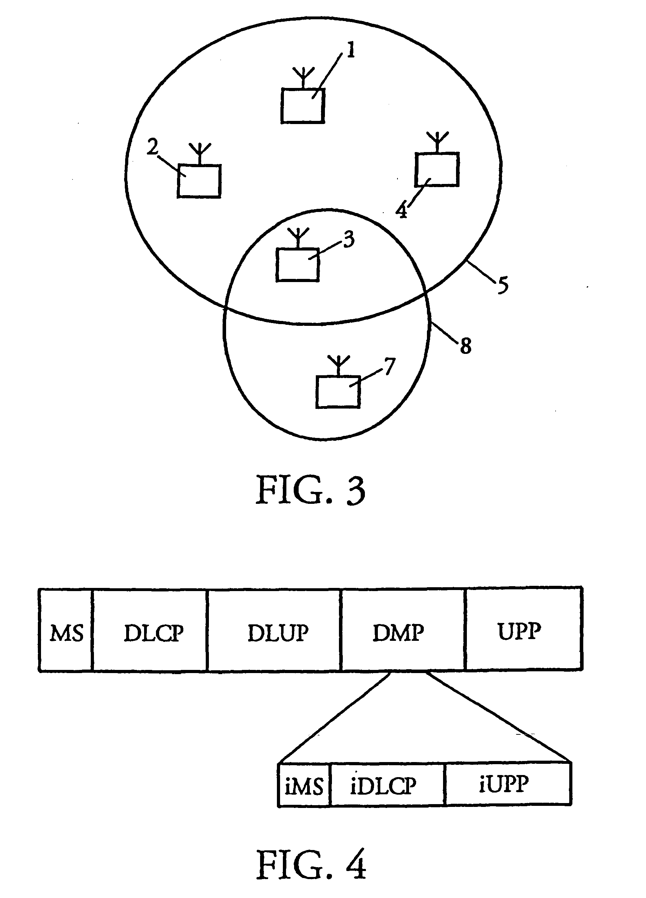

Bei dem in Fig. 1 dargestellten drahtlosen Netzwerk können alle normalen Netzknoten 2 bis 4 Steuer- und Nutzdaten von dem zentralen Netzknoten 1 empfangen. In Fig. 3 ist ein weiteres drahtloses Netzwerk dargestellt, das außer dem zentralen Netzknoten 1 und den normalen Netzknoten 2 bis 4 einen Netzknoten 7 enthält, der als versteckter Netzknoten bezeichnet wird. Der Netzknoten 7 wird als versteckter Netzknoten bezeichnet, weil dieser nur Daten mit einem normalen Netzknoten (in der Fig. 3 ist das der Netzknoten 3) aber nicht mit dem zentralen Netzknoten 1 austauschen kann. Dies wird in der Fig. 3 durch eine weitere Ellipse 8 angedeutet, welche die Netzknoten 3 und 7 umfaßt.

Der normale Netzknoten 3 hat die Funktion Daten des zentralen Netzknotens 1 und anderer normaler Netzknoten 2 bis 4 zum versteckten Netzknoten 7 und Daten vom versteckten Netzknoten 7 an den zentralen Netzknoten 1 und an alle anderen normalen Netzknoten 2 bis 4 zu übertragen. Ein solcher normaler Netzknoten 3, der Daten mit einem versteckten Netzknoten (z.B. Netzknoten 7) austauscht, wird von dem versteckten Netzknoten als emulierter zentraler Netzknoten angesehen.

Für die Einbindung eines versteckten Netzknotens 7, der keinen direkten Funkkontakt mit dem zentralen Netzknoten 1 hat, ist in dem MAC-Rahmen während bestimmter Zeiträume ein spezieller Subrahmen vorgesehen, der vor der Einbindung als Initialisierungs-Subrahmen bezeichnet wird. Während des Auftretens des Initialisierungs-Subrahmens werden von dem zentralen Netzknoten 1 die Rahmensynchronisations- und einige Steuerdaten über den selektierten Netzknoten 3 zum versteckten Netzknoten 7 geliefert. Diesen Initialisierungs-Subrahmen legt der zentrale Netzknoten dynamisch während einer Phase DMP und/oder UPP fest. Ein MAC-Rahmen und ein Initialisierungs-Subrahmen sind in Fig. 4 dargestellt. Der Initialisierungs-Subrahmen besteht aus einer Rahmensynchronisationsphase iMS, einer Downlink-Steuerphase iDLCP und einer Uplink-Phase iUPP. Während der Phase iMS werden die Rahmensynchronisationsdaten von den speziellen Netzknoten (z.B. Netzknoten 3) wiederholt und während der Phase iDLCP einige Steuerdaten des zentralen Netzknotens weitergereicht. Die Phase iUPP enthält nur einen Zufallskanal iRACH, in dem ein noch nicht eingebundener versteckter Netzknoten (z.B. Netzknoten 7) einen Einbindungswunsch in das drahtlose Netzwerk übermitteln kann.

Der Einbindungswunsch von dem versteckten Netzknoten 7 wird als Nachricht oder Mitteilung von einem selektierten Netzknoten 3 während der Phase iUPP des Initialisierungs-Subrahmens empfangen. Der selektierte Netzknoten 3 leitet die Nachricht mit dem Einbindungswunsch zu dem zentralen Netzknoten 1 in der nächsten Phase UPP des MAC-Rahmens weiter, die nicht Bestandteil des Initialisierungs-Subrahmens ist. Wenn der zentrale Netzknoten 1 den Einbindungswunsch des versteckten Netzknotens 7 akzeptiert, wird die Anfangsposition des folgenden Subrahmens festgelegt. Dieser folgende Subrahmen wird nach der Einbindung als Arbeits-Subrahmen (operational sub-frame) bezeichnet. Diese Startposition ist für alle folgenden Arbeits-Subrahmen bezogen auf den MAC-Rahmen immer an der gleichen Position bis zu dem Zeitpunkt, an dem der versteckte Netzknoten 7 das drahtlose Netzwerk verläßt. Die Länge des Arbeits-Subrahmens ist variabel und wird von dem zentralen Netzknoten 1 in Abhängigkeit von der zu übertragenden Datenmenge ab. Der von dem versteckten Netzknoten 7 selektierte normale Netzknoten 3 wird mit dem Start des ersten Arbeits-Subrahmens ein Transfer-Netzknoten.

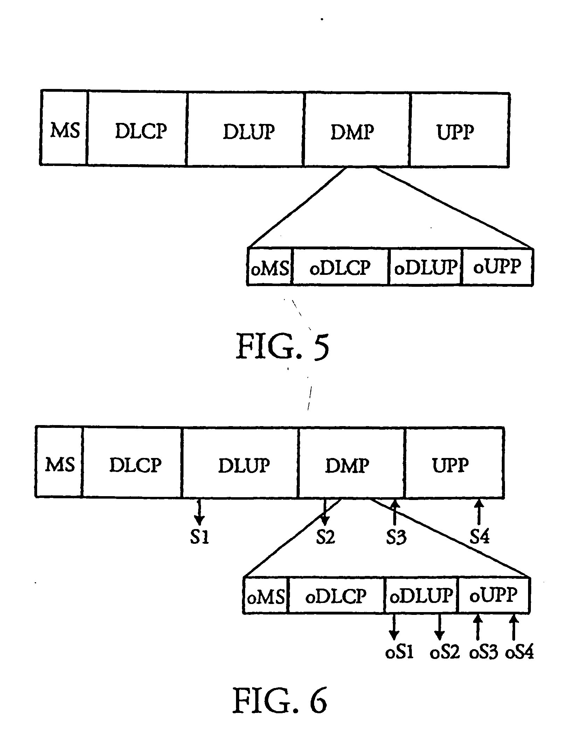

Der Arbeits-Subrahmen umfaßt eine Rahmensynchronisationsphase oMS und eine Downlink-Steuerphase oDLCP (Fig. 5). Zusätzlich kann der Arbeits-Subrahmen noch eine Downlink-Nutzdatenphase oDLUP und eine Uplink-Phase oUPP enthalten. Der Transfer-Netzknoten 3 wiederholt kontinuierlich die von dem zentralen Netzknoten 1 empfangenen Rahmensynchronisationsdaten während der Phase oMS und alle Steuerdaten des zentralen Netzknotens 1, welche für den versteckten Netzknoten 7 von Bedeutung sind, in der Phase oDLCP des Arbeits-Subrahmens. Beispielsweise wird die von dem zentralen Netzknoten 1 ausgesendete Nachricht über die Zuweisung eines Zeitschlitzes für den versteckten Netzknoten 7 als Steuerdaten von dem Transfer-Netzknoten 3 während der Phase oDLCP wiederholt.

Der versteckte Netzknoten 7 kann einen Zufallskanal oRACH während der Phase oUPP nutzen, um über einen dedizierten Kanal eine Punkt-zu-Punkt-Verbindung (unicast connection) oder eine Mehrfachverbindung (multicast connection) in dem drahtlosen Netzwerk anzufordern. Eine Punkt-zu-Punkt-Verbindung über einen dedizierten Kanal von dem versteckten Netzknoten 7 zu irgendeinem anderen Netzknoten 1 bis 4 wird als dedizierter Uplink-Kanal des versteckten Netzknotens 7 bezeichnet und abkürzend als Uplink-Kanal oUDCH geschrieben. Der Uplink-Kanal oUDCH ist wie ein Zufallskanal oRACH Teil der Phase oUPP des Arbeits-Subrahmens. Der zentrale Netzknoten 1 sendet Steuerdaten mit einer Mitteilung über eine Zuweisung für einen solchen Uplink-Kanal oUDCH während der Phase DLCP des MAC-Rahmens. Der Transfer-Netzknoten 3 leitet dieses Steuerdaten an den versteckten Netzknoten 7 während der Phase oDLCP des Arbeits-Subrahmens weiter. Der zentrale Netzknoten 1 muß aber nicht nur einen oder mehrere Zeitschlitze für den Uplink-Kanal oUDCH (uplink dedicated channel) in dem Arbeits-Subrahmen zuweisen sondern auch entsprechende Zeitschlitze in einer Phase DMP und/oder einer Phase UPP des MAC-Rahmens. Diese entsprechenden, außerhalb des Arbeits-Subrahmens liegenden Zeitschlitze werden von dem Transfer-Netzknoten 3 benötigt, um Daten von dem versteckten Netzknoten 7 zu einem oder mehreren anderen Netzknoten 1 bis 4 über den Transfer-Netzknoten 3 zu senden. Diese Zeitschlitze gehören zu einem Kanal, der analog zum Uplink-Kanal oUDCH des Arbeits-Subrahmens als Uplink-Kanal UDCH bezeichnet wird.

Wenn Nutzdaten von einen normalen Netzknoten 2 und 4 und/oder dem zentralen Netzknoten 1 zu dem versteckten Netzknoten 7 gesendet werden sollen, muß der zentrale Netzknoten 1 einen dedizierten Downlink-Kanal oDDCH in der Phase oDLUP des Arbeits-Subrahmens zuweisen. Dieser Downlink-Kanal oDDCH wird zur Übertragung von Nutzdaten vom Transfer-Netzknoten 3 zum versteckten Netzknoten 7 verwendet. Ein entsprechender Downlink-Kanal muß ebenfalls im MAC-Rahmen in der Phase DMP oder UPP außerhalb des Arbeits-Subrahmens von dem zentralen Netzknoten 1 für die Verbindung von einem oder mehreren Netzknoten 1, 2 und 4 zu dem Transfer-Netzknoten 3 zugewiesen werden.

Ein Beispiel für von dem zentralen Netzknoten 1 zugewiesene Zeitschlitze im Arbeits-Subrahmen zeigt Fig. 6. In der Phase oDLUP des Arbeits-Subrahmens sind zwei Zeitschlitze oS1 und oS2 als Downlink-Kanäle oDDCH von dem zentralen Netzknoten 1 zugewiesen worden. Entsprechende Zeitschlitze oder Downlink-Kanäle S1 und S2 sind in den Phasen DLUP und DMP vorhanden. Nutzdaten beispielsweise von einem normalen Netzknoten (z.B. Netzknoten 2) werden über den Zeitschlitz S1 bzw. S2 zum Transfer-Netzknoten 3 und von diesem während des Zeitschlitzes oS1 bzw. oS2 zum versteckten Netzknoten 7 gesendet.

Für die umgekehrte Senderichtung sind von dem zentralen Netzknoten 1 zwei Zeitschlitze oS3 und oS4 als Uplink-Kanäle oUDCH im Arbeits-Subrahmen zugewiesen worden. Entsprechende Zeitschlitze S3 und S4 als Uplink-Kanäle UDCH sind in den Phasen DMP und UPP des MAC-Rahmens außerhalb des Arbeits-Subrahmen enthalten. Der versteckte Netzknoten 7 sendet über den Zeitschlitz oS3 bzw. oS4 Daten zum Transfer-Netzknoten 3, der diese Daten während des Auftretens der Zeitschlitze S3 bzw. S4 zu beispielsweise einem normalen Netzknoten weiterleitet.

Es sei noch bemerkt, daß Daten zwischen dem Transfer-Netzknoten 3 und dem versteckten Netzknoten 7 ausgetauscht werden können. In einem solchen Fall ist die Zuweisung von Zeitschlitzen im MAC-Rahmen nicht erforderlich, sondern nur eine Zuweisung von Zeitschlitzen im Arbeits-Subrahmen.

## Patentansprüche

1. Drahloses Netzwerk mit mehreren jeweils eine Funkvorrichtung enthaltenen Netzknoten (1-4, 7), von denen einer einen Transfer-Netzknoten (3) bildet, der zur Übertragung von Daten zwischen wenigstens einem versteckten Netzknoten (7) und allen anderen Netzknoten (1, 2, 4) vorgesehen ist, wobei
einer der Netzknoten(1-4, 7) einen zentralen Netzknoten (1) zur Steuerung des Funkverkehrs bildet,
der zentrale Netzknoten(1) zur Aussendung von Rahmensynchronisationsdaten(MS) zur Bildung von in jeder Funkvorrichtung verwendeten Rahmen vorgesehen ist,
der Tranfer-Netzknoten (3) zum Austausch von Daten des zentralen Netzknotens(1) mit dem versteckten Netzknoten(7) vorgesehen ist; und
der zentrale Netzknoten(1) für den Austausch der Daten zwischen Transfer-Netzknoten (3) und versteckten Netzknoten (7) zur Zuweisung eines in einem Rahmen liegenden Subrahmens vorgesehen ist, welcher vor der Einbindung eines versteckten Netzknotens (7) in das drahtlose Netzwerk Initialisierungs-Subrahmen und nach der Einbindung Arbeits-Subrahmen genannt wird, **dadurch gekenntzeichnet, dass** der zentrale Netzknoten (1) im Initialisierungs-Subrahmen vor der Einbindung des versteckten Netzknotens (7) in das drahtlose Netzwerk und im Arbeits-Subrahmen nach der Einbindung des versteckten Netzknotens (7) in das drahtlose Netzwerk über Mittel zum Zuweisen von mehreren Zeitschlitze, für den versteckten Netzknoten (7) zum Senden von Daten vertügt und dem Transfer-Netzknoten (3) im Rahmen entsprechende Zeitschlitze zu den mehreren Zeitschlitzen im Initialisierungs-Subrahmen und im Arbeits-Subrhmenzuweisen kann, so dass der Transfer-Netzknoten (3) die Daten des versteckten Netzknotens (7) im Rahmen zum Netzwerk weiterleiten kann.

2. Drahtloses Netzwerk nach Anspruch 1,
**dadurch gekennzeichnet,**
**dass** der zentrale Netzknoten (1) während einer ersten Phase des Rahmens zur Sendung von Rahmensynchronisationsdaten(MS) und während einer zweiten Phase des Rahmens,
die sich direkt an die erste Phase anschließt, zur Sendung von Steuerdaten(DLCP) vorgesehen ist, und
**dass** der Transfer-Netzknoten (3) während einer ersten Phase des Initialisierungs-Subrahmens oder des Arbeits-Subrahmens zur Sendung der von dem zentralen Netzknoten (1) empfangenen Rahmensynchronisationsdaten (iMS ioMs) und während der zweiten Phase des Rahmens zur Sendung von dem zentralen Netzknoten empfangenen Steuerdaten (iDLCP ioDLCP) vorgesehen ist.

3. Drahtloses Netzwerk nach Anspruch 1,
**dadurch gekennzeichnet,**
**dass** eine Funkvorrichtung eines Netzknotens zur Bildung eines der Medium Access Control -Schicht zugeordneten Rahmens vorgesehen ist.

4. Drahtloses Netzwerk nach Anspruch 2,
**dadurch gekennzeichnet,**
**dass** während einer dritten Phase des Rahmens, die sich direkt an die zweite Phase anschließt, der zentrale Netzknoten zur Sendung von Nutzdaten (DLUP) zu wenigstens einem anderen Netzknoten(2-4) vorgesehen ist,
**dass** der Transfer-Netzknoten (3) zum Austausch von Daten mit dem versteckten Netzknoten (7) während einer vierten und fünften Phase des Rahmens, die sich direkt an die dritte Phase anschließen, vorgesehen ist und dass während der vierten nicht von dem Initialisierungs-Subrahmen oder dem Arbeits-Subrahmen belegten Phase des Rahmens andere Netzknoten(2-4) zum Austausch von Nutzdaten (DMP) untereinander und während der fünften nicht von dem Initialisierungs-Subrahmen oder dem Arbeits-Subrahnen belegten Phase wenigstens ein anderer Netzknoten(2-4) zur Sendung von Nutzdaten (UPP) zum zentralen Netzknoten (1) vorgesehen ist.

5. Drahtloses Netzwerk nach Anspruch 2,
**dadurch gekennzeichnet,**
**dass** vor der Einbindung eines versteckten Netzknoten (7) in das drahtlose Netzwerk der Transfer-/Netzknoten während einer dritten Phase des Initialisierungs-Subrahmens zum Empfang eines Nachricht über einen Einbindungswunsch des versteckten Netzknotens (7) vorgesehen ist.

6. Drahtloses Netzwerk nach Anspruch 2,
**dadurch gekennzeichnet,**
**dass** nach der Einbindung eines versteckter Netzknoten (7) in das drahtlose Netzwerk der Transfer-Netzknoten(3) während einer dritten Phase(DLUP) des Arbeits-Subrahmens,
die sich direkt an die zweite Phase (DLCP) des Arbeits-Subrahmens anschließt, zur Sendung von Nutzdaten und während einer vierten Phase(oUPP) des Arbeits-Subrahmens die sich direkt an die dritte Phase abschließt, zum Empfang von Steuer- und/oder Nutzdaten des versteckten Netzknotens (7) vorgesehen ist.

7. Verfahren zur drahtlosen Übertragung von Daten zwischen mehreren jeweils eine Funkvorrichtung enthaltenen Netzknoten (1-4, 7) von denen einer einen Transfer-Netzknoten(3) bildet, der Daten zwischen wenigstens einem versteckten Netzknoten (7) und allen anderen Netzknoten (1-4) überträgt,
wobei
einer der Netzknoten als zentraler Netzknoten den Funkverkehrs steuert und Rahmensynchronisationsdaten(MS) aussendet, aus denen in jeder Funkvorrichtung Rahmen gebildet werden,
der Transter-Netzknoten (3) Daten des zentralen Netzknotens(1) mit dem versteckten Netzknoten (7) austauscht, und
der zentrale Netzknoten(1) für den Austausch der Daten zwischen Transfer-Netzhnoten (3) und verstecktenNetzknoten (7) ein in einem Rahmen liegendenSubrahmens zuweist, welcher vor der Einbindung eines versteckten Netzknotens (7) in das drahtlose Netzwerk Initialisierungs-Subrahmen und nach der Einbindung Arbeits-Subrahmen genannt wird, **dadurch gekennzeichnet, dass** der zentrale Netzknoten (1) im Initialisierungs-Subrahmen vor der Einbindung des versteckten Netzknotens (7) in das drahtlose Netzwerk und im Arbeits-Subrahmen nach der Einbindung des versteckten Netzknotens (7) in das drahtloses Netzwerk mehrere Zeitschlitze für den versteckten Netzknoten (7) zum Senden von Daten und dem Transfer-Netzknoten (3) im Rahmen entsprechende Zeitschlitze zu den mehreren Zeitschlitzen im Initialisierungs-Subrahmen und im Arbeits-Subrähmen zuweist, so dass der Transfer-netzknoten (3) die Daten des versteckten Netzknotens (7) im Rahmen zum Netzwerk weiterleiten kann.

8. Netzknoten in einem drahtloses Netzwerk mit mehreren jeweils eine Funkvorrichtung enthaltenen, weiteren Netzknoten (2-4),
wobei
der Netzknoten als zentraler Netzknoten
- zur Steuerung des Funkverkehrs und zur Aussendung von Rahmensynchronisationsdaten (MS) zur Bildung von in jeder Funkvorrichtung verwendeten Rahmen und
- dass der zentrale Netzknoten (1) zur Zuweisung eines in einem Rahmen liegenden Subrahmens vorgesehen ist, welcher vor der Einbindung eines versteckten Netzknotens (7) in das drahtlose Netzwerk Initialisierungs-Subrahmen und nach der Einbindung Arbeits-Subrahmen genannt wird, während dessen Auftreten Daten zwischen einem transfer-Netzknoten(3) und einem verstecktenNetzknotens (7) übertragen werden, **dadurch** gekenntzeichnet, dass der zentrale Netzknoten (1) im Initialisierungs-Subrahmen vor der Einbindung des versteckten Netzknotens (7) in das drahtlose Netzwerk und im Arbeits-Subrahmen nach der Einbindung des versteckten Netzknotens (7) in das drahtlose Netzwerk über Mittel zum Zuweisen von mehreren Zeitschlitzen für den versteckten Netzknoten (7) zum Senden von Daten vertügt und dem Transfer-Netzknoten (3) im Rahmen entsprechende Zeitschlitze zu den mehreren Zeitschlitzen im Initialisierungs-Subrahmen und im Arbeits-Subrahmen zuweisen kann, so dass der Transfer-Netzknoten (3) die Daten des versteckten Netzknotens (7) im Rahmen zum Netzwerk weiterleiten kann.

9. Netzknoten in einem drahtlosen Netzwerk mit mehreren jeweils eine Funkvorrichtung enthaltenen, weiteren Netzknoten (1, 2, 4), der zur Übertragung von Daten zwischen wenigstens einem versteckten Netzknoten (7) und allen anderen Netzknoten(1,2,4) vorgesehen ist,
wobei
der Netzknoten als Transfer-Netzknoten (3) zum Austausch von Daten des versteckten Netzknoten(7) mit einem zentralen Netzknoten(1) vorgesehen ist, der den Funkverkehr des drahtlosen Netzwerks steuert und Rahmensynchronisationsdaten (MS) zur Bildung von in jeder Funkvorrichtung verwendeten Rahmen aussendet, und
der Transfer-Netzknoten (3) während des Auftretens eines in einem Rahmen liegenden Subrahmens, welcher vor der Einbindung eines versteckten Netzknotens (7) in das drahtlose Netzwerk Initialisierungs-Subrahmen und nach der Einbindung Arbeits-Subrahmen genannt wird, und den der zentrale Netzknoten (1) zuweist, zum Austausch der Daten mit dem versteckten Netzknoten (7) vorgesehen ist, **dadurch gekennzeichnet, dass** der zentrale Netzknoten (1) im Initialisierungs-Subrahmen vor der Einbindung des versteckten Netzknotens (7) in das drahtlose Netzwerk und im Arbeits-Subrahmen nach der Einbindung des versteckten Netzknotens (7) in das drahtlose Netzwerk über Mittel zum Zuweisen von mehreren Zeitschlitzen für den versteckten Netzknoten (7) zum Senden von Daten vertügt und dem Transfer-Netzknoten (3) im Rahmen entsprechende Zeitschlitze zu den mehreren Zeitschlitzen im Initialisierungs-Subrahmen undimArbeits-subrahmen zuweisen kann, so dass der Transfer-Netzknoten (3), die Daten des versteckten Netzknotens (7) im Rahmen zum Netzwerk weiterleiten kann.

## Claims

1. Wireless network with several network nodes (1-4, 7) containing one radio device each, one of which nodes constitutes a transfer network node (3) that is provided for the transmission of data between at least one hidden network node (7) and all other network nodes (1, 2, 4); where
one of the network nodes (1-4, 7) constitutes a central network node (1) for controlling radio communications,
the central network node (1) is used for transmission of frame synchronization data (MS) to create frames used by each wireless device,
the transfer network node (3) provides for exchange of data between the central network node (1) and the hidden network node (7); and
the central network node (1) provides for the exchange of data between the transfer network node (3) and the hidden node (7) for the purpose of allocating a subframe contained in a frame, which subframe is called an initialization subframe before the integration of a hidden network node (7) in the wireless network, and a work subframe after integration; **characterized in that** the central network node (1) disposes of means for assigning multiple time slots to the hidden node (7) for the purpose of data transmission, both in the initialization subframe before integration of a hidden network node (7) in the wireless network, and in the work subframe after integration of a hidden network node (7) into the wireless network; and the transfer network node (3) in the frame can allocate corresponding time slots to the multiple time slots in the initialization subframe and in the work subframe, so that the transfer network node (3) can forward the data of the hidden network node (7) in the frame to the network.

2. A wireless network according to claim 1, **characterized in that**
the central network node (1) is provided for transmitting frame synchronization data (MS) during the first phase of the frame, and during the second phase of the frame, connected directly to the first phase, for transmitting control data (DLCP); and
that the transfer network node (3) is provided, during the first phase of the initialization subframe or work subframe, for transmission of frame synchronization data (iMS, oMS) received by the central network node (1), and during the second phase of the frame for transmission of the control data (iDLCP, oDLCP) received by the central network node.

3. Wireless network according to claim 1, **characterized in that**
creation of a frame assigned to a Medium Access Control layer is provided for a network node radio device.

4. Wireless network according to claim 2, **characterized in that**
during a third phase of the frame connected directly to the second phase, the central network node is provided with transmission capability of user data (DLUP) to at least one other network node (2-4); that
the transfer network node (3) is capable of exchanging data with the hidden network node (7) during a fourth and fifth phase of the frame connected directly to the third phase; and that during the fourth phase, not occupied by the initialization subframe or the work subframe of the frame, other network nodes (2-4) can mutually exchange user data (DMP), and during the fifth phase, not occupied by the initialization subframe or the work subframe of the frame, at least one other network node (2-4) is provided for transmitting user data (UPP) the central network node (1).

5. Wireless network according to claim 2, **characterized in that**
prior to the integration of a hidden network node (7) in the wireless network, the transfer network node during a third phase of the initialization subframe is capable of receiving a message via an integration request of the hidden network node (7).

6. Wireless network according to claim 2, **characterized in that**
after the integration of a hidden network node (7) in the wireless network, the transfer network node (3), during a third phase (oDLUP) of the work subframe directly connected to the second phase (oDLCP) of the work subframe, is capable of transmission of user data, and, during a fourth phase (oUPP) of the work subframe directly connected to the third phase, is capable of receiving control and/or user data from the hidden network node (7).

7. Procedure for wireless transmission of data between several network
nodes (1-4, 7) containing one radio device each, one of which nodes constitutes a transfer network node (3) that transmits data between at least one hidden network node (7) and all other network nodes (1-4);
whereby one of the network nodes acts as a central network node that controls radio communications and transmits frame synchronization data (MS), from which frames are established in each radio device,
the transfer network nodes (3) exchanges data of the central network node (1) with the hidden nodes (7), and
the central network node (1) assigns subframes in a frame for the exchange of data between the transfer network node (3) and hidden nodes (7), which is assigned prior to the integration of a hidden network node (7) in the wireless network initialization subframe and after integration work subframe; **characterized in that** the central network node (1), in the initialization subframe before integration of a hidden network node (7) in the wireless network, and the work subframe after integration of the hidden network node (7) in the wireless network, assigns multiple time slots to the hidden network node (7) for the transmission of data, and, to the transfer network node (3) in the frame, corresponding time slots to the multiple time slots in the initialization subframe and the work subframe, so that the transfer network node (3) can transfer the data from the hidden network node (7) in the frame to the network.

8. Network nodes in a wireless network with multiple additional network nodes (2-4) with one radio device each,
whereby said network node acts as a central network node:
- for the control of radio communications and for the transmission of frame synchronization data (MS) for the formation of frames used by the radio devices, and
- that in the central network node (1) there is a provision for the assignment of a frame subframe, which, prior to the integration of a hidden node (7) in the wireless network is called an initialization subframe, and after integration is called a work subframe while its received data is transferred between a transfer network node (3) and a hidden network node (7); **characterized in that** the central network node (1) in the initialization subframe before integration of the hidden network node (7) in the wireless network, and in the work subframe after integration of the hidden network node (7) in the wireless network, disposes of means for assigning multiple time slots for the hidden network node (7) for the transmission of data, and the transfer network node (3) in the frame can assign corresponding time slots to the multiple time slots in the initialization subframe and the work subframe, so that the transfer network node (3) can transfer the data from the hidden network node (7) in the frame to the network.

9. Network node in a wireless network with several network nodes containing one radio device each, other network nodes (1, 2, 4) provided for the transfer of data between at least one hidden network node (7) and all other network nodes (1, 2, 4);
whereby the network node is provided as transfer network node (3) for exchanging data of the hidden network node (7) with a central network node (1), that controls radio communications of the wireless network and issues frame synchronization data (MS) for the formation of frames used by radio devices, and
whereby the transfer network node (3), during the occurrence of a subframe in a frame, which, before integration of a hidden network node (7) in the wireless network is called an initialization subframe and after integration in is called a work subframe, assigns the central network node (1) for the exchange of data with the hidden node (7); **characterized in that** the central network node (1) in the initialization subframe before integration of the hidden network node (7) in the wireless network, and in the work subframe after integration of the hidden network node (7) in the wireless network, disposes of means for assigning multiple time slots for the hidden network node (7) for the transmission of data, and the transfer network node (3) in the frame can assign corresponding time slots to the multiple time slots in the initialization subframe and the work subframe, so that the transfer network node (3) can transfer the data from the hidden network node (7) in the frame to the network.

## Revendications

1. Réseau sans fil comprenant plusieurs noeuds de réseau (1-4, 7) contenant respectivement un dispositif radio, l'un des noeuds formant un noeud de réseau de transfert (3) servant à transmettre les données entre au moins un noeud de réseau caché (7) et tous les autres noeuds de réseau (1, 2, 4),
l'un des noeuds de réseau (1-4, 7) formant un noeud de réseau central (1) servant à commander la liaison radio,
le noeud de réseau central (1) servant à émettre des données de verrouillage de trame (MS) étant prévu pour former des trames utilisées dans chaque dispositif radio,
le noeud de réseau de transfert (3) étant prévu pour échanger les données du noeud de réseau central (1) avec le noeud de réseau caché (7) ; et
le noeud de réseau central (1) pour l'échange de données entre le noeud de réseau de transfert (3) et le noeud de réseau caché (7) étant prévu pour allouer une sous-trame située dans une trame, ladite sous-trame étant désignée par sous-trame d'initialisation avant l'intégration d'un noeud de réseau caché (7) dans le réseau sans fil et par sous-trame de travail après cette intégration, **caractérisé en ce que** le noeud de réseau central (1) dans la sous-trame d'initialisation avant l'intégration du noeud de réseau caché (7) dans le réseau sans fil et dans la sous-trame de travail après l'intégration du noeud de réseau caché (7) dans le réseau sans fil dispose de moyens servant à allouer plusieurs créneaux temporels pour le noeud de réseau caché (7) servant à envoyer des données et peut allouer au noeud de réseau de transfert (3) dans la trame des créneaux temporels correspondants à la pluralité de créneaux temporels dans la sous-trame d'initialisation et dans la sous-trame de travail, de sorte que le noeud de réseau de transfert (3) peut transmettre au réseau les données du noeud de réseau caché (7) dans la trame.

2. Réseau sans fil selon la revendication 1, **caractérisé en ce que**
le noeud de réseau central (1), pendant une première phase de la trame, est prévu pour envoyer des données de verrouillage de trame (MS) et pendant une deuxième phase de la trame, faisant directement suite à la première phase, pour envoyer des données de commande (DLCP), et
**en ce que** le noeud de réseau de transfert (3), pendant une première phase de la sous-trame d'initialisation ou de la sous-trame de travail, est prévu pour envoyer des données de verrouillage de trame (iMS, ioMs) reçues par le noeud de réseau central (1) et, pendant la deuxième phase de la trame, est prévu pour envoyer des données de commande (iDLCP ; aDLCP) reçues par le noeud de réseau central.

3. Réseau sans fil selon la revendication 1, **caractérisé en ce que**
un dispositif radio d'un noeud de réseau est prévu pour former une trame associée à la sous-couche de contrôle d'accès au support.

4. Réseau sans fil selon la revendication 2, **caractérisé en ce que**,
pendant une troisième phase de la trame faisant directement suite à la deuxième phase, le noeud de réseau central est prévu pour envoyer des données utilisateur (DLUP) à au moins un autre noeud de réseau (2-4),
**en ce que** le noeud de réseau de transfert (3) est prévu pour échanger des données avec le noeud de réseau caché (7) pendant une quatrième et une cinquième phase de la trame faisant directement suite à la troisième phase, et **en ce que** pendant la quatrième phase de la trame non occupée par la sous-trame d'initialisation ou la sous-trame de travail, d'autres noeuds de réseau (2-4) sont prévus pour échanger des données utilisateurs (DMP) entre eux et pendant la cinquième phase non occupée par la sous-trame d'initialisation ou la sous-trame de travail, au moins un autre noeud de réseau (2-4) est prévu pour envoyer des données utilisateur (UPP) au noeud de réseau central (1).

5. Réseau sans fil selon la revendication 2, **caractérisé en ce que**
avant l'intégration d'un noeud de réseau caché (7) dans le réseau sans fil, le noeud de réseau de transfert pendant une troisième phase de la sous-trame d'initialisation est prévu pour recevoir un message de souhait d'intégration du noeud de réseau caché (7).

6. Réseau sans fil selon la revendication 2, **caractérisé en ce que**
après l'intégration d'un noeud de réseau caché (7) dans le réseau sans fil, le noeud de réseau de transfert (3) pendant une troisième phase (oDLUP) de la sous-trame de travail, qui fait directement suite à la seconde phase (oDLCP) de la sous-trame de travail, est prévu pour envoyer des données utilisateurs et, pendant une quatrième phase (oUPP) de la sous-trame de travail, qui fait directement suite à la troisième phase, pour recevoir des données de commande et/ou utilisateur du noeud de réseau caché (7).

7. Procédé de transmission sans fil de données entre plusieurs noeuds de réseau (1-4, 7) contenant respectivement un dispositif radio, l'un des noeuds formant un noeud de réseau de transfert (3) servant à transmettre les données entre au moins un noeud de réseau caché (7) et tous les autres noeuds de réseau (1-4),
l'un des noeuds de réseau comme noeud de réseau central (1) commandant la liaison radio et émettant des données de verrouillage de trame (MS) dont les trames sont formées dans chaque dispositif radio,
le noeud de réseau de transfert (3) échangeant des données du noeud de réseau central (1) avec le noeud de réseau caché (7) ;
le noeud de réseau central (1) pour l'échange de données entre le noeud de réseau de transfert (3) et le noeud de réseau caché (7) allouant une sous-trame située dans une trame, ladite sous-trame étant désignée par sous-trame d'initialisation avant l'intégration d'un noeud de réseau caché (7) dans le réseau sans fil et par sous-trame de travail après cette intégration, **caractérisé en ce que** le noeud de réseau central (1) dans la sous-trame d'initialisation avant l'intégration du noeud de réseau caché (7) dans le réseau sans fil et dans la sous-trame de travail après l'intégration du noeud de réseau caché (7) dans le réseau sans fil alloue plusieurs créneaux temporels pour le noeud de réseau caché (7) servant à envoyer des données et au noeud de réseau de transfert (3) dans la trame des créneaux temporels correspondants à la pluralité de créneaux temporels dans la sous-trame d'initialisation et dans la sous-trame de travail, de sorte que le noeud de réseau de transfert (3) peut transmettre au réseau les données du noeud de réseau caché (7) dans la trame.

8. Noeud de réseau dans un réseau sans fil comprenant plusieurs autres noeuds de réseau (2-4) contenant respectivement un dispositif radio,
le noeud de réseau comme noeud de réseau central
- servant à commander la liaison radio et à émettre des données de verrouillage de trame (MS) étant prévu pour former des trames utilisées dans chaque dispositif radio et
- en ce que le noeud de réseau central (1) est prévu pour allouer une sous-trame située dans une trame, ladite sous-trame étant désignée avant l'intégration d'un noeud de réseau caché (7) dans le réseau sans fil par sous-trame d'initialisation et après l'intégration par sous-trame de travail, sous-trame pendant l'apparition de laquelle les données sont transmises entre un noeud de réseau de transfert (3) et un noeud de réseau caché (7), **caractérisé en ce que** le noeud de réseau central (1) dans la sous-trame d'initialisation avant l'intégration du noeud de réseau caché (7) dans le réseau sans fil et dans la sous-trame de travail après l'intégration du noeud de réseau caché (7) dans le réseau sans fil dispose pour le noeud de réseau caché (7) servant à envoyer des données de moyens servant à allouer plusieurs créneaux temporels et peut allouer au noeud de réseau de transfert (3) dans la trame des créneaux temporels correspondants à la pluralité de créneaux temporels dans la sous-trame d'initialisation et dans la sous-trame de travail, de sorte que le noeud de réseau de transfert (3) peut transmettre au réseau les données du noeud de réseau caché (7) dans la trame.

9. Noeud de réseau dans un réseau sans fil comprenant plusieurs autres noeuds de réseau (1, 2, 4) contenant respectivement un dispositif radio, ledit noeud étant prévu pour transmettre des données entre au moins un noeud de réseau caché (7) et tous les autres noeuds de réseau (1, 2, 4),
le noeud de réseau comme noeud de réseau de transfert (3) étant prévu pour échanger des données du noeud de réseau caché (7) avec un noeud de réseau central (1), ledit noeud de réseau central commandant la liaison radio du réseau sans fil et émettant des données de verrouillage de trame (MS) pour former des trames utilisées dans chaque dispositif radio, et
le noeud de réseau de transfert (3) pendant l'apparition d'une sous-trame située dans une trame, ladite sous-trame étant désignée par sous-trame d'initialisation avant l'intégration d'un noeud de réseau caché (7) dans le réseau sans fil et par sous-trame de travail après cette intégration, et que le noeud de réseau central (1) alloue, étant prévu pour échanger des données avec le noeud de réseau caché (7), **caractérisé en ce que** le noeud de réseau central (1) dans la sous-trame d'initialisation avant l'intégration du noeud de réseau caché (7) dans le réseau sans fil et dans la sous-trame de travail après l'intégration du noeud de réseau caché (7) dans le réseau sans fil dispose de moyens servant à allouer plusieurs créneaux temporels pour le noeud de réseau caché (7) servant à envoyer des données et peut allouer au noeud de réseau de transfert (3) dans la trame des créneaux temporels correspondants à la pluralité de créneaux temporels dans la sous-trame d'initialisation et dans la sous-trame de travail, de sorte que le noeud de réseau de transfert (3) peut transmettre au réseau les données du noeud de réseau caché (7) dans la trame.
